# FASCICULE DE BREVET EUROPEEN

(11) **EP 0 453 824 B1**
(45) Date de publication et mention de la délivrance du brevet: **07.09.1994**
(21) Numéro de dépôt: 91105183.7
(22) Date de dépôt: 02.04.1991
(51) Int. Cl.: G01B 7/14, G01D 5/14

(54) **Capteur pour la mesure du déplacement relatif transversal d'une pièce conductrice de forme allongée**
Sensor zur Messung der relativen transversalen Verschiebung eines leitenden Stückes in länglicher Form
Sensor for measuring the relative transversial displacement of an elongated conducting piece

(30) Priorité: 06.04.1990 FR 9004436
(43) Date de publication de la demande: 30.10.1991
(73) Titulaire: GEC ALSTHOM SA, 75116 Paris (FR); INSTITUT NATIONAL DE RECHERCHE SUR LES TRANSPORTS ET LEUR SECURITE, 94114 Arcueil (FR); REGIE AUTONOME DES TRANSPORTS PARISIENS "RATP", 75271 Paris Cédex 06 (FR); ECOLE NORMALE SUPERIEURE DE CACHAN, F-94230 Cachan (FR)
(72) Inventeur: Aknin, Patrice, Inst. Nat. de Recherche sur les Tr, F-94114 Arceuil Cedex (FR)
(74) Mandataire: Weinmiller, Jürgen

(56) Documents cités:
- EP-A- 0 179 720
- DE-A- 3 326 477
- DE-B- 1 285 191
- US-A- 3 515 984
- SOVIET INVENTIONS ILLUSTRATED, section physique, semaine 9029, 29 août 1990, abrégé no. 223321 S/02, Derwent Publications Ltd., London, GB; & SU-A-1516747
- SOVIET INVENTIONS ILLUSTRATED, semaine K 04, 9 mars 1983, abrégé no. B3320 S/02, Derwent Publications Ltd., London, GB; & SU-A-916966

## Description

La présente invention concerne un capteur pour la mesure du déplacement relatif transversal d'une pièce conductrice de forme allongée.

L'invention trouve une application particulièrement intéressante dans la mesure de la position transversale d'une roue d'un véhicule par rapport à un rail sur lequel ou à côté duquel elle roule; une connaissance précise et permanente de cette position est une condition indispensable pour la réalisation, par exemple, de véhicules ayant des essieux à orientation asservie.

Le capteur selon l'invention est du type à courants de Foucault. C'est en effet ce type de capteur qui est le plus approprié aux applications ferroviaires, car il est robuste, possède une bonne immunité aux bruits, peut être rendu pratiquement insensible aux variations éventuelles de température. En outre, ce type de capteur n'est pas sensible aux variations des propriétés magnétiques de la pièce dont on mesure le déplacement transversal relatif, de sorte qu'il peut même être utilisé sur les tronçons de rails amagnétiques (coeur d'aiguillage au manganèse), pourvu qu'ils restent conducteurs.

Cette technologie de capteur est connue, par exemple par la demande de brevet japonais n° 57-173 701, qui utilise deux bobinages de forme polygonale, en particulier triangulaire, placés de part et d'autre de l'axe longitudinal du rail, dans un même plan, et de manière à ce qu'un angle de chaque polygone soit à l'intersection de l'axe vertical du rail. Les bobinages sont alimentés à leur fréquence de résonance, ce qui permet d'observer des variations d'impédance des bobinages. Chaque impédance est convertie en tension continue par un étage de conversion, et le déplacement transversal du capteur par rapport au centre du rail est obtenu par un traitement, dans un circuit électronique, de la différence des signaux continus.

Un tel capteur présente des inconvénients:
- la taille des bobinages est telle que le capteur ne reste dans l'ombre de la roue que pour un faible déplacement latéral. Pour des déplacements latéraux plus importants, le capteur sort alors inévitablement du gabarit utilisé.
- un tel capteur possède de par sa conception, deux faces actives, et l'approche d'une pièce conductrice par le dessus du capteur se traduit par la même variation de la mesure que lors de l'approche de la même pièce par le dessous du capteur.
- pour tenir compte de la hauteur du capteur par rapport au rail qui peut varier au cours de la mesure ou d'un capteur à l'autre, il est nécessaire d'apporter une correction au signal de déplacement; le brevet japonais évoque la mise en oeuvre d'une électronique numérique avec en particulier mémorisation au préalable de données de référence, La présence de cette mémoire complique le circuit électronique.

Le document US-A-3 515 984 décrit un système pour la mesure de la largeur d'une voie comprenant, pour chaque rail de la voie, un support magnétique solidaire du châssis d'un véhicule et portant un plot magnétique muni d'un bobinage d'excitation et un ou deux plots magnétiques munis de bobinages récepteurs. Un dispositif électronique associé permet de déterminer la largeur de la voie, mais ne fournit pas un signal indiquant l'écart transversal d'une roue par rapport au rail sur lequel elle roule.

Un but de l'invention par rapport à ce document est de réaliser un dispositif permettant de fournir un signal proportionnel à un tel écart.

Un autre but de l'invention est de réaliser un capteur à courants de Foucault à une seule face active, totalement insensible à la présence de pièces métalliques au-dessus du capteur.

Un autre but de l'invention est de réaliser un capteur et une électronique associée totalement analogique permettant de fournir. un signal précis de mesure du déplacement transversal qui tienne compte automatiquement des variations possibles de la hauteur du capteur par rapport au rail.

Un autre but de l'invention est de réaliser un capteur peu sensible aux variations de température, ne nécessitant pas la présence d'une sonde de température.

L'invention a pour objet un capteur pour la mesure du déplacement relatif transversal d'une pièce conductrice de forme allongée, du type à courants de Foucault, caractérisée en ce qu'il comprend un circuit en matériau magnétique en forme de T muni de quatre plots d'axes parallèles sur chacun desquels est disposé un enroulement de mesure, les plots du premier et du troisième de ces enroulements étant disposés aux extrémités de la barre transversale du T, le plot du second de ces enroulements étant placé au milieu de la barre transversale du T, la barre transversale du T étant perpendiculaire à la direction longitudinale de ladite pièce, le plot du quatrième enroulement étant placé à l'extrémité de la barre verticale du T, un enroulement d'excitation alimenté à fréquence élevée et bobiné sur la barre verticale du T, les premier et troisième enroulements ayant un même nombre de spires, le second et le quatrième enroulement possédant un nombre se spires assurant sensiblement l'égalité des tensions induites à leur bornes, le capteur étant associé en outre un circuit électronique détectant la différence (U1 - U3) des tensions mesurées aux bornes des premier et troisième enroulements, la somme (U2 + U4) des tensions mesurées aux bornes des second et quatrième enroulements et calculant le rapport de ladite différence à ladite somme, ce rapport constituant le déplacement recherché.

Le capteur comporte un blindage entourant complètement le circuit magnétique et les plots à l'exception de l'extrémité des plots en regard de la pièce conductrice.

Dans un premier mode de réalisation, le blindage comprend une partie inférieure d'épaisseur sensiblement égale à la hauteur des plots et comprenant quatre trous épousant la forme des enroulements et une partie supérieure, ladite partie inférieure comprenant des saignées pratiquées sur toute son épaisseur et s'étendant de chacun des trous à ses bords, les deux parties étant électriquement isolées l'une de l'autre.

Les saignées sont des fentes planes ou courbes.

Elles peuvent comporter des pièges à flux constitués d'obstacles métalliques.

Dans un autre mode de réalisation, le blindage comprend trois parties dont les faces en contact sont isolées électriquement.

Chaque plot peut être associé à un plot complémentaire disposé symétriquement par rapport au circuit magnétique et muni d'un enroulement identique.

Avantageusement, le blindage, réalisé en trois parties dont les faces en contact sont isolées électriquement, comporte une cavité de référence entourant les plots complémentaires dans laquelle sont disposés des éléments de haute perméabilité magnétique destinés à réaliser une répartition des flux magnétiques identique à celle qui existe au niveau des plots situés au droit de la pièce conductrice, lorsque celle-ci se trouve centrée par rapport au capteur et à la hauteur nominale.

L'invention est précisée par la description de divers modes de réalisation de l'invention, donnés à titre d'exemples illustratifs mais nullement limitatifs.

On a choisi de montrer l'application du capteur de l'invention à la mesure du déplacement transversal entre une roue d'un véhicule ferroviaire et le rail supportant la roue. Il est bien entendu que cet exemple ne limite pas la portée de l'invention qui trouve application dans bien d'autres branches de l'industrie.

On se référera au dessin annexé dans lequel:
- la figure 1 est une vue partielle d'un essieu de véhicule muni d'un capteur selon l'invention,
- la figure 2 est une vue en perspective éclatée d'un capteur selon un premier mode de réalisation de l'invention,
- la figure 3 est une vue partielle en plan d'un blindage selon un mode particulier de réalisation,
- la figure 4 est une vue partielle en plan d'un blindage selon une variante,
- la figure 5 est une vue en perspective éclatée d'un capteur selon une variante de réalisation de l'invention,
- la figure 6 est une vue en perspective éclatée d'un capteur selon une autre variante de réalisation de l'invention
- la figure 7 est un schéma du circuit électronique associé au capteur.

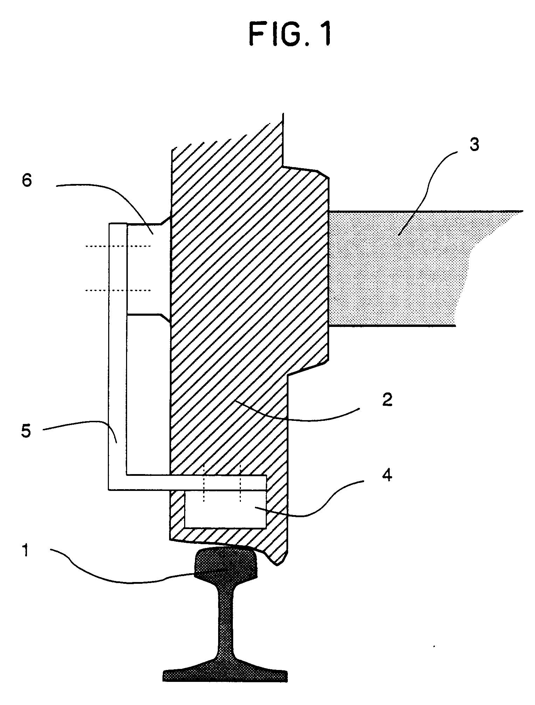

Dans la figure 1, la référence 1 désigne un rail, vu en bout, sur lequel roule une roue 2 portée par un arbre 3; le capteur de l'invention 4 est placé devant la roue, à une hauteur h égale à quelques centimètres. Le capteur est porté par un bras 5 fixé à la boîte d'essieu. Le capteur est destiné, rappelons-le, à mesurer le déplacement transversal de la roue par rapport au rail, en vue par exemple de réaliser des bogies à essieux orientables.

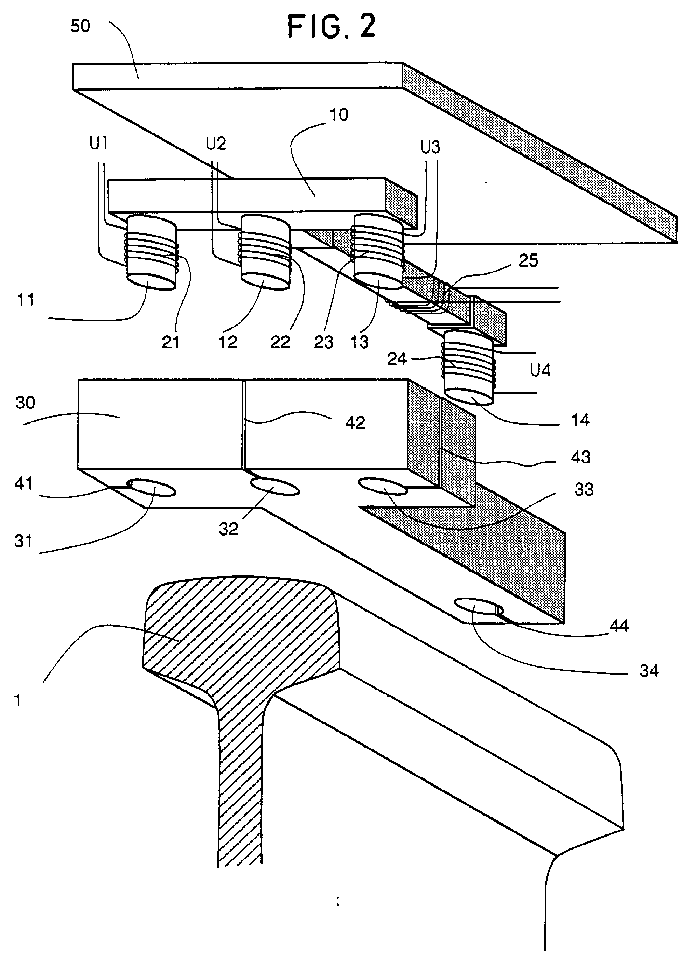

Dans la figure 2, la référence 10 désigne un circuit en matériau à haute perméabilité magnétique, de préférence de la ferrite, qui a une forme générale en T et présente quatre plots cylindriques 11, 12, 13 et 14. Ces plots sont représentés à base circulaire,mais ceci n'est qu'un exemple car la forme de la base n'est pas critique; elle peut être, en variante, carrée ou polygonale, de surface approximativement égale. Chacun des plots porte un bobinage de mesure: les plots 11 et 13, situés aux extrémités de la barre transversale du T, portent des enroulements 21 et 23; le plot 12, situé au milieu de la barre transversale du T, à égale distance des plots 11 et 13, porte un enroulement 22. Le plot 14 porte un enroulement 24.

Un enroulement d'excitation 25, disposé autour de la barre verticale du T, est relié à une source alternative à fréquence élevée, supérieure à 100 kHz et préférentiellement de l'ordre de 250kHz, non représentée.

Le flux issu du plot 14 se referme sélectivement sur les plots 11, 12, et 13. Les trois entrefers d'air associés possèdent une réluctance équivalente dont les variations peuvent être reliées directement à la proximité de la pièce conductrice (dans l'exemple décrit, la pièce conductrice est le rail). Cette variation de réluctance duale d'un changement de topographie des lignes de champ magnétique, est due à la présence de nappes de courant de Foucault qui se développent dans l'épaisseur de peau de la pièce métallique (épaisseur très faible aux fréquences utilisées et pour des matériaux métalliques) et qui à leur tour créent un champ antagoniste au champ incident. La conjonction de ces deux champs génère le champ total qui est nul dans la pièce conductrice. Le décalage du rail vers le plot 13 par exemple, augmente la réluctance du circuit magnétique associé à ce plot au détriment de celle du circuit magnétique associé au plot 11. Il s'en suit des variations de tensions observées aux bornes des bobinages 21 à 24.

On désignera dans la suite par U1, U2, U3, et U4 les tensions respectives aux bornes des enroulements 21 à 24.

Le capteur possède un blindage métallique en matériau conducteur, par exemple en duralumin. Ce blindage a un triple rôle:
- tout d'abord, il assure la rigidité mécanique du capteur
- ensuite, il permet de réduire le flux de fuite, ce qui permet d'augmenter sa sensibilité,
- enfin il permet, grâce à sa partie qui surmonte le circuit magnétique, de ne rendre le capteur sensible que sur une seule face, dénommée face active.

Le blindage représenté dans la figure 2 comprend une plaque inférieure 30 d'épaisseur égale à la hauteur des plots. Elle peut être de section rectangulaire ou, comme montré dans le dessin de la figure 2, découpé en forme de T comme le circuit magnétique. Le blindage est complété par une plaque supérieure 50, fixée à la plaque 30 par des moyens non représentés.

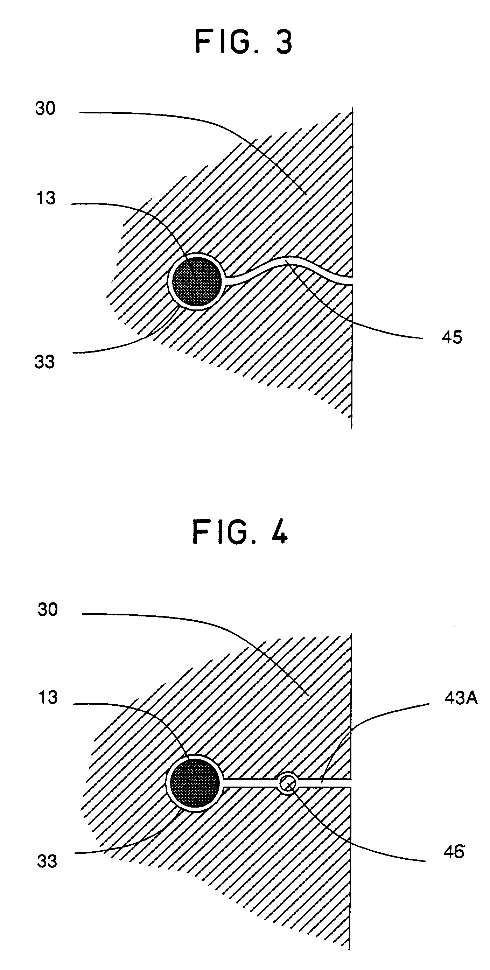

La plaque 30 possède quatre trous 31 à 34 perpendiculaires au plan de la plaque, dans lesquels s'engagent les enroulements 21 à 24. Les plots affleurent à la surface de la plaque; cette dernière est munie de saignées 41 à 44 s'étendant sur toute l'épaisseur de la plaque et de chacun des trous 31 à 34 à un bord de la plaque. Cette disposition permet d'éviter la mise en court-circuit de boucles de courant dans le blindage et autour des plots, ce qui reviendrait à annuler les tensions observées. Les saignées sont soit des fentes droites, comme représenté dans la figure 2, soit des fentes courbes 45 comme il est montré dans la figure 3, en vue de limiter les flux de fuite. Les saignées peuvent également comporter des pièges à flux, formés d'obstacles métalliques, comme le montre la figure 4, qui représente une saignée plane 43A présentant un élargissement dans lequel est placé une tige métallique 46. Toujours pour éviter la fermeture de ces boucles de courant, il est impératif de veiller à l'isolation électrique des blindages 30 et 50 par exemple par traitement des surfaces en contact ou par interposition entre les plaques d'une feuille plastique isolante, par exemple en mylar (marque déposée).

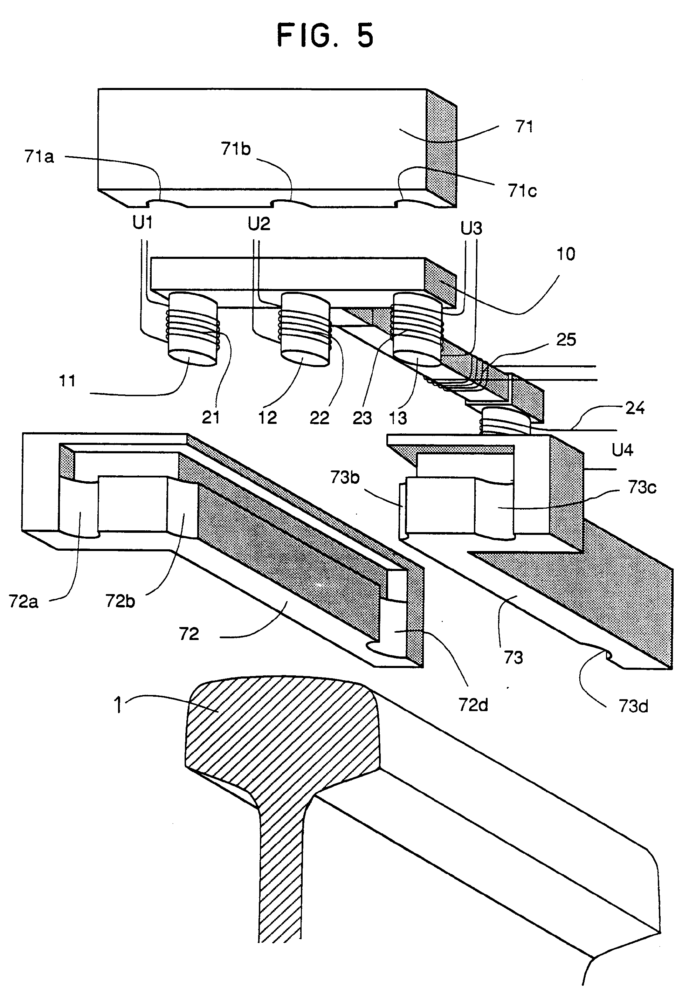

La figure 5 représente une première variante de réalisation de l'invention dans laquelle seule le blindage diffère de celui représenté dans la figure 2. Les éléments communs aux figures 2 et 5 ont reçu les mêmes numéros de référence.

Le blindage est cette fois réalisé en trois parties 71, 72 et 73 qui sont destinées à être juxtaposées. Les parties possèdent des cavités telle que 71a, 71b, 71c, 72a, 72b, 72d, et 73b, 73c, 73d qui, lorsque la juxtaposition est effectuée, délimitent les volumes destinés aux plots porteurs des enroulements.

Les faces des parties destinées à venir en contact sont isolées, par exemple par un traitement de surface adéquat (tel qu'anodisation) ou en recevant une couche de matériau isolant ou par interposition d'une feuille de matériau isolant, par exemple une feuille de mylar (marque déposée).

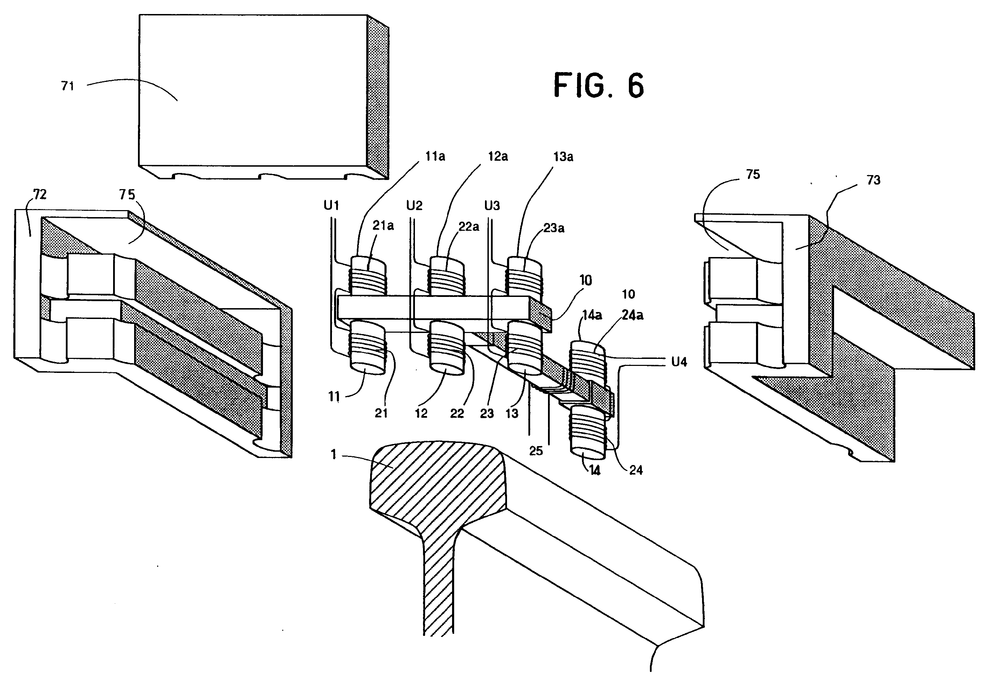

La figure 6 décrit une autre variante de réalisation de l'invention. Les éléments communs aux figures 5 et 6 ont reçu les mêmes numéros de référence. Dans cette variante, on se propose de rendre toutes les mesures différentielles pour s'affranchir des dérives dues aux variations de température.

Pour cela, il est prévu d'associer à chacun des plots décrits précédemment, un plot complémentaire, 11a, 12a, 13a, 14a; ces plots complémentaires sont munis d'enroulements 21a, 22a, 23a, 24a respectivement identiques aux enroulements des plots associés; les plots complémentaires sont disposés symétriquement par rapport au circuit magnétiques; les enroulements de deux plots complémentaires sont reliés en série et fournissent quatre tensions de mesure U1, U2, U3 et U4. Grâce à cette double série de plots on peut compenser:
- les effets dus à la dilatation différentielle pouvant survenir entre les plots (en ferrite) et le blindage (en duralumin),
- les variations des capacités parasites existant entre enroulements et blindage ou entre enroulements et circuit magnétique.

Pour ne conserver qu'une seule face active au capteur, une cavité 75 de référence est disposée dans la partie supérieure du blindage. Afin de reproduire, à la position nominale (c'est-à-dire à déplacement nul du rail) un environnement magnétique identique pour les deux séries de plots, il est prévu de disposer, dans la cavité 75 qui surmonte les plots complémentaires et qui contient l'ensemble des flux magnétiques circulant entre ces plots, des éléments à haute perméabilité magnétique de forme et de dimensions ajustables.

Une telle présence d'éléments magnétique permet de réduire avantageusement la taille de la cavité 75.

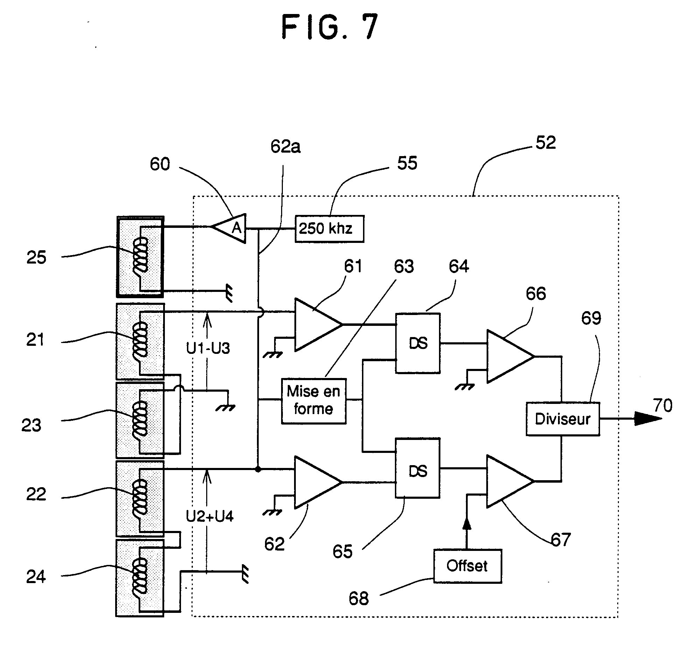

Un exemple de réalisation du circuit électronique associé au capteur est représenté dans la figure 7 dans le rectangle en pointillé. Le circuit électronique traite les deux tensions U1 - U3 et U2 + U4 obtenues par la mise en série convenable des enroulements 21 et 23 d'une part, et 22 et 24 d'autre part. Il comprend une alimentation 55 à haute fréquence (supérieure à 100 KHz, par exemple 250 KHz), qui alimente l'enroulement 25 par l'intermédiaire d'un amplificateur 60.

Le circuit électronique opère tout d'abord une détection de l'amplitude respective des tensions U1 - U3 et U2 + U4 grâce aux amplificateurs 61 et 62.

On notera que le signal U1 - U3 est nul pour la position nominale (déplacement relatif du rail nul). Cette circonstance est favorable car l'amplificateur 61 travaille loin de la saturation. Pour permettre à l'amplificateur 62 relatif au signal U2 + U4 de travailler dans les mêmes conditions, on retranche au signal reçu un signal en phase avec l'alimentation 55, grâce à la liaison 62A. Cette liaison peut être supprimée lorsqu'on utilise le mode de réalisation de la figure 6, car toutes les tensions de mesure sont nulle à la hauteur nominale et pour un rail centré.

Le circuit électronique opère ensuite une détection synchrone au moyen de deux circuits spécialisés 64 et 65 recevant respectivement les signaux issus des amplificateurs 61 et 63 et un signal en phase avec la tension d'alimentation convenablement mis en forme par un circuit 63. La détection synchrone est un mode préférentiel de détection car il permet une bonne réjection du bruit situé à d'autres fréquences que celle de l'alimentation (bruit lié à la présence de forts courants dans les rails ou aux interrupteurs électroniques mis en oeuvre pour l'alimentation des moteurs de traction par exemple).

Après filtrage, par des organes 66 et 67, on dispose de deux grandeurs dont on effectue le rapport grâce à un circuit arithmétique analogique 69. Ce circuit fournit un signal 70 qui est l'indication du déplacement latéral relatif du rail par rapport au capteur. Cette indication est pratiquement indépendante de la hauteur du capteur par rapport au rail.

La hauteur du capteur peut en effet varier en raison des fortes accélérations sur le capteur et de l'élasticité de la patte de fixation. On peut avantageusement ajuster un offset 68 sur l'organe 67 de manière à rendre le signal de sortie 70 encore plus indépendant de la hauteur.

L'invention trouve une application toute les fois qu'on souhaite rechercher l'écart transversal de position d'un objet donné par rapport à une pièce conductrice de forme allongée.

## Revendications

1. Capteur pour la mesure du déplacement relatif transversal d'une pièce conductrice de forme allongée, du type à courants de Foucault, caractérisée en ce qu'il comprend un circuit (10) en matériau magnétique en forme de T muni de quatre plots (11, 12, 13, 14) d'axes parallèles sur chacun desquels est disposé un enroulement de mesure (21, 22, 23, 34), les plots du premier (21) et du troisième (23) de ces enroulements étant disposés aux extrémités de la barre transversale du T, le plot du second (22) de ces enroulements étant placé au milieu de la barre transversale du T, la barre transversale du T étant perpendiculaire à la direction longitudinale de ladite pièce, le plot du quatrième enroulement (24) étant placé à l'extrémité de la barre verticale du T, un enroulement d'excitation (25) alimenté à fréquence élevée et bobiné sur la barre verticale du T, les premier et troisième enroulements ayant un même nombre de spires, le second et le quatrième enroulement possédant un nombre se spires assurant sensiblement l'égalité des tensions induites à leur bornes, le capteur étant associé en outre à un circuit électronique détectant la différence (U1 - U3) des tensions mesurées aux bornes des premier et troisième enroulements, la somme (U2 + U4) des tensions mesurées aux bornes des second et quatrième enroulements et calculant le rapport de ladite différence à ladite somme, ce rapport constituant le déplacement recherché.

2. Capteur selon la revendication 1, caractérisé en ce qu'il comporte un blindage (30, 50) entourant complètement le circuit magnétique et les plots à l'exception de l'extrémité des plots en regard de la pièce conductrice.

3. Capteur selon la revendication 2, caractérisé en ce que le blindage comprend une partie inférieure (30) d'épaisseur sensiblement égale à la hauteur des plots et comprenant quatre trous épousant la forme des enroulements (21, 22, 23, 24), et une partie supérieure (50), ladite partie inférieure comprenant des saignées (41, 42, 43, 44) pratiquées sur toute son épaisseur et s'étendant de chacun des trous à ses bords, les deux parties étant électriquement isolées l'une de l'autre.

4. Capteur selon la revendication 3, caractérisé en ce que les saignées (41, 42, 43, 44) sont des fentes planes.

5. Capteur selon la revendication 3, caractérisé en ce que les saignées sont des fentes courbes (45).

6. Capteur selon l'une des revendications 3 à 5, caractérisé en ce que lesdites saignées comportent des pièges à flux constitués d'obstacles métalliques (46).

7. Capteur selon la revendication 2, caractérisé en ce que le blindage comprend trois parties (71, 72,73) dont les faces en contact sont isolées électriquement.

8. Capteur selon la revendication 1, caractérisé en ce que chaque plot (11, 12, 13, 14) est associé à un plot complémentaire (11a, 12a, 13a, 14a) disposé symétriquement par rapport au circuit magnétique et muni d'un enroulement identique (21a, 22a, 23a, 24a).

9. Capteur selon l'une des revendications 7 et 8, caractérisé en ce que le blindage, réalisé en trois parties dont les faces en contact sont isolées électriquement, comporte une cavité de référence (75), entourant les plots complémentaires (11a, 12a, 13a, 14a) dans laquelle sont disposés des éléments de haute perméabilité magnétique destinés à réaliser une répartition des flux magnétiques identique à celle qui existe au niveau des plots (11, 12, 13, 14) situés au droit de la pièce conductrice, lorsque celle-ci se trouve centrée par rapport au capteur et à sa hauteur nominale.

## Patentansprüche

1. Wirbelstromsensor zur Messung der relativen Querverschiebung eines länglichen leitenden Teils, dadurch gekennzeichnet, daß er einen T-förmigen Kreis (10) aus magnetischem Material, der mit vier achsparallelen Kernen (11, 12, 13, 14) versehen ist, auf denen je eine Meßwicklung (21, 22, 23, 24) angeordnet ist, wobei die Kerne der ersten (21) und der dritten (23) Wicklung an den Enden des Querbalkens des T angeordnet sind, während der Kern der zweiten (22) Wicklung in der Mitte des senkrecht zur Längsrichtung des genannten Teils verlaufenden Querbalkens des T angeordnet ist und der Kern der vierten Wicklung (24) am Ende des senkrechten Balkens des T angeordnet ist, und eine Erregerwicklung (25) aufweist, die mit einer hohen Frequenz gespeist und auf den senkrechten Balken des T aufgewickelt ist, wobei die erste und die vierte Wicklung eine gleiche Anzahl von Windungen aufweisen und die zweite und die vierte Wicklung eine Anzahl von Windungen besitzen, die im wesentlichen die Gleichheit der an ihren Klemmen induzierten Spannungen bewirkt, wobei dem Sensor weiter eine elektronischen Schaltung zugeordnet ist, die die Differenz (U1 - U3) der an den Klemmen der ersten und der dritten Wicklung gemessenen Spannungen und die Summe (U2 + U4) der an den Klemmen der zweiten und der vierten Wicklung gemessenen Spannungen erfaßt und die das Verhältnis dieser Differenz zu dieser Summe berechnet, wobei das Verhältnis die gesuchte Verschiebung bildet.

2. Sensor nach Anspruch 1, dadurch gekennzeichnet, daß er eine Abschirmung (30, 50) besitzt, die den Magnetkreis und die Kerne mit Ausnahme des Endes der Kerne gegenüber dem leitenden Teil ganz umgibt.

3. Sensor nach Anspruch 2, dadurch gekennzeichnet, daß die Abschirmung ein unteres Teil (30) mit einer Dicke, die im wesentlichen der Höhe der Kerne entspricht, und vier der Form der Wicklungen (21, 22, 23, 24) angepaßte Löcher besitzt, und ein oberes Teil (50) aufweist, wobei das untere Teil Einschnitte (41, 42, 43, 44) aufweist, die durch seine gesamte Dicke geführt sind und sich von jedem der Löcher aus bis zu seinen Rändern erstrecken, und wobei die beiden Teile elektrisch gegeneinander isoliert sind.

4. Sensor nach Anspruch 3, dadurch gekennzeichnet, daß die Einschnitte (41, 42, 43, 44) ebene Schlitze sind.

5. Sensor nach Anspruch 3, dadurch gekennzeichnet, daß die Einschnitte gekrümmte Schlitze (45) sind.

6. Sensor nach einem der Ansprüche 3 bis 5, dadurch gekennzeichnet, daß die Einschnitte Flußfallen enthalten, die aus metallischen Hindernissen (46) bestehen.

7. Sensor nach Anspruch 2, dadurch gekennzeichnet, daß die Abschirmung drei Teile (71, 72, 73) aufweist, deren sich berührende Seiten elektrisch gegeneinander isoliert sind.

8. Sensor nach Anspruch 1, dadurch gekennzeichnet, daß jeder Kern (11, 12, 13, 14) einem komplementären Kern (11a, 12a, 13a, 14a) zugeordnet ist, der symmetrisch relativ zum magnetischen Kreis angeordnet ist und mit einer identischen Wicklung (21a, 22a, 23a, 24a) versehen ist.

9. Sensor nach Anspruch 7 oder 8, dadurch gekennzeichnet, daß die Abschirmung, die aus drei Teilen hergestellt ist, deren einander berührende Flächen elektrisch gegeneinander isoliert sind, einen Bezugshohlraum (75) enthält, der die komplementären Kerne (11a, 12a, 13a, 14a) umgibt und in dem Elemente hoher magnetischer Permeabilität angeordnet und dazu bestimmt sind, eine Verteilung des magnetischen Flusses herbeizuführen, die identisch derjenigen ist, die im Bereich der frontal dem leitenden Teil gegenüberstehenden Kerne (11, 12, 13, 14) besteht, wenn sich das Teil in einer relativ zum Sensor zentralen Position und auf seiner Nennhöhe befindet.

## Claims

1. Eddy current type sensor for measuring relative transverse displacement of an elongate conductive member characterised in that it comprises a T-shape magnetic material circuit (10) having four studs (11, 12, 13, 14) with parallel axes on each of which is disposed a measuring winding (21, 22, 23, 24), the studs of the first and third windings (21, 23) being disposed at the ends of the crossbar of the T-shape, the stud of the second winding (22) being disposed at the centre of the crossbar of the T-shape, the crossbar of the T-shape being perpendicular to the longitudinal direction of said member, the stud of the fourth winding (24) being at the end of the upright of the T-shape, an excitation winding (25) energised at a high frequency and wound onto the upright of the T-shape, the first and third windings having the same number of turns, the second and fourth windings having a number of turns ensuring that the voltages induced between their terminals are substantially equal, the sensor being further associated with an electronic circuit detecting the difference (U1 - U3) between the voltages measured at the terminals of the first and third windings, the sum (U2 + U4) of the voltages measured at the terminals of the second and fourth windings and calculating the ratio of said difference to said sum, this ratio constituting the required displacement.

2. Sensor according to claim 1 characterised in that it comprises a screen (30, 50) completely surrounding the magnetic circuit and the studs except for the ends of the studs facing the conductive member.

3. Sensor according to claim 2 characterised in that the screen has a top part (50) and a bottom part (30) whose thickness is substantially equal to the height of the studs and comprising four holes matching the shape of the windings (21, 22, 23, 24) and cut-outs (41, 42, 43, 44) through all of its thickness and extending from each of the holes to its edge, the two parts being electrically insulated from each other.

4. Sensor according to claim 3 characterised in that the cut-outs (41, 42, 43, 44) are plane slots.

5. Sensor according to claim 3 characterised in that the cut-outs are curved slots (45).

6. Sensor according to any one of claims 3 to 5 characterised in that said cut-outs comprise flux traps consisting of metal obstacles (46).

7. Sensor according to claim 2 characterised in that the screen has three parts (71, 72, 73) whose sides in contact are electrically insulated.

8. Sensor according to claim 1 characterised in that each stud (11, 12, 13, 14) is associated with a complementary stud (11a, 12a, 13a, 14a) disposed symmetrically relative to the magnetic circuit and provided with an identical winding (21a, 22a, 23a, 24a).

9. Sensor according to claim 7 or claim 8 characterised in that the screen, in three parts whose surfaces in contact are electrically insulated, comprises a reference cavity (75) around the complementary studs (11a, 12a, 13a, 14a) in which are disposed high magnetic permeability members adapted to distribute the magnetic flux in exactly the same way as at the studs (11, 12, 13, 14) facing the conductive member when the latter is centred relative to the sensor and at its nominal height.
